# EUROPEAN PATENT APPLICATION

(11) **EP 4 596 402 A1**
(43) Date of publication of application: **06.08.2025**
(21) Application number: 24154862.7
(22) Date of filing: 30.01.2024
(51) Int. Cl.: B64D 11/00, B64D 11/04, F25D 3/12

(54) **WATER TANK, AIRCRAFT CABIN TROLLEY, AIRCRAFT GALLEY AND AIRCRAFT**

(71) Applicant: Airbus Operations GmbH, 21129 Hamburg (DE)
(72) Inventor: Trümper, Torsten, Hamburg (DE); Rappold, Moritz, Hamburg (DE)

(57) **Abstract**

Water tank (1, 1'), comprising: a dry ice compartment (3) arranged inside the tank (1, 1') to be brought in contact with water to be cooled inside the tank (1, 1'), wherein the compartment (3) is provided with a hole (15) for discharging evaporated gas from the compartment (3) into a space that is closer to a top wall of the tank (1, 1') than a bottom wall of the tank (1, 1'), wherein a side wall of the tank (1, 1') connects the top and the bottom walls of the tank (1, 1'), and that is above the water volume within the tank (1, 1'); and a water outlet (11) extending from the bottom wall of the tank (1, 1'). Aircraft cabin trolley, aircraft galley (25) and aircraft (27) with the water tank (1, 1').

## Description

### Technical Field

The invention relates to a water tank that is efficient in storing and processing water stored therein, said water tank being preferably useful as a cabin trolley water tank in aircraft operation. The invention is further directed towards an aircraft galley and an aircraft with said tank or cabin trolley.

### Background

The current process to serve cold soft drinks in a cabin of an aircraft is to pre-load different kinds of pre-chilled soft drinks in an aircraft cabin trolley. Those trolleys will be cooled during the aircraft mission, e.g. during the flight, by actively cooled galleys. Flight attendants use trolleys with different soft drinks in glass bottles or cans for serving the passengers. However, the number of transported drinks is higher than needed to guarantee that each passenger will get the kind of drink he wants.

For this purpose, trolleys are known, which allow flight attendants to make soft drinks based on cold water and different kinds of syrup. These trolleys help to optimize catering operations in the cabin and reduce waste.

### Summary

The problem to be solved is to provide a water tank, e.g. an aircraft cabin trolley with such a water tank, having a high cost efficiency and a high water cooling efficiency, wherein the water can be delivered in a simple and reliable way, such that it can be used for the preparation of soft drinks, for example.

The problem is solved by the subject matter of the independent claim(s).

The solution reduces the complexity of the cooling system for the water tank. Hence, a complex vapor cycle system to keep the water cold during a flight is not necessary, because of the passive cooling effect from the dry ice in the dry ice compartment. Additionally, the gas from the dry ice can be used for pressurization of the water tank. This allows for a simple way to tap water from the tank. This saves weight, is less prone to failure than a more complex technical solution, and can easily be integrated into existing cabin operations, where dry ice is already used. Also, the catering of drinks can be faster because the number of bottles can be reduced.

The problem underlaying the invention is particularly solved by the following technical teachings:
(1) Water tank, comprising: a dry ice compartment arranged inside the tank to be brought in contact with water to be cooled inside the tank, wherein the compartment is provided with a hole for discharging evaporated gas from the compartment into a space that is closer to a top wall of the tank than a bottom wall of the tank, wherein a side wall of the tank connects the top and the bottom walls of the tank, and that is above the water volume within the tank; and a water outlet extending from the bottom wall of the tank. Thus, without using external means, a high efficiency of water cooling and delivering of the so cooled water from the tank is enabled.
(2) Water tank according to section (1), wherein said tank further comprises at least one heat exchanging element thermally contacting the dry ice compartment and extending into the water volume to be cooled. Such arrangement helps further enhancing the cooling of cold water in the tank. The at least one heat exchanging element may be located closer to the hole than to the bottom wall of the tank. The at least one heat exchanging element may be configured to be operational and/or most efficient only within a predetermined temperature range of the water volume within the tank, such as from 1 °C, 2 °C, 3 °C or 4 °C. Thereby, water of the water volume within the tank can be prevented from freezing to the at least one heat exchanging element.
(3) Water tank according to section (2), wherein the at least one heat exchanging element comprises a major portion extending in parallel to the side wall of the tank. Thereby, an improved cooling of the water distanced from the dry ice compartment can be achieved.
(4) Water tank according to section (3), wherein said major portion of the at least one heat exchanging element is closer to the side wall of the tank than to the dry ice compartment. This measure will help cool the water distanced even farther from the dry ice compartment.
(5) Water tank according to one of sections (2) to (4), wherein multiple heat exchanging elements are provided as heat pipes, which comprise a minor portion extending orthogonally from a bottom portion of the dry ice compartment. Since the bottom portion of the dry ice compartment is the coolest portion of the dry ice compartment, the cooling efficiency of the multiple heat exchanging elements is further improved. The heat pipes may be configured to be operational and/or most efficient only within a predetermined temperature range of the water volume within the tank, such as from 1 °C, 2 °C, 3 °C or 4 °C. Thereby, water of the water volume within the tank can be prevented from freezing to the heat pipes.
(6) Water tank according to one of sections (1) to (5), wherein the dry ice compartment is arranged at a center of the tank, and wherein the water outlet extends from the bottom wall of the tank at a location closer to the dry ice compartment than to the side wall of the tank. Such a location ensures that cooler water is output through the outlet compared to another location that is closer to the side wall of the tank than the dry ice compartment.
(7) Water tank according to one of sections (1) to (6), wherein said tank is equipped with a pump configured to pump water from the tank. Such pump facilitates in addition to the pressurized gas or alternatively the pumping of water from the tank to a tapping point.
(8) Water tank according to section (7), wherein said tank further comprises a pressure control and ventilation valve configured to control the pressure inside the tank. Preferably, the pressure control and ventilation valve is configured to provide feedback to the pump, and the pump is configured to compensate insufficient pressure within the tank. Such a technical measure provides an automated regimen of operation for steady and reliable delivery of cold water from the tank.
(9) Water tank according to one of sections (1) to (8), wherein said tank further comprises a manual valve configured to be opened to equalize the pressure within the tank. This valve enables a manual equalizing of the pressure in the tank in emergency situations or stopping an uncontrolled water outflow from the tank during maintenance.
(10) Water tank according to one of sections (1) to (9), wherein the dry ice compartment comprises an insulation that is configured to prevent the water volume from freezing to such an extent that passage to and/or through the water outlet is blocked. Since water close to the dry ice can become frozen, it is further possible to provide an insulation only along a bottom part of the dry ice compartment. The at least one heat exchanging element may be located partially or entirely above the insulation.
(11) Aircraft cabin trolley with the water tank according to one of sections (1) to (10). This shall encompass the use of the water tank according to one of sections (1) to (10) in an aircraft cabin trolley. This is particularly favorable in view of the increased demand for a bigger variety of cold soft drinks at a still limited capacity of cabin trolleys on the board of aircrafts.
(12) Aircraft galley with the water tank according to one of sections (1) to (10) or with an aircraft cabin trolley according to section (11). Thereby, the aircraft galley may offer cold water from multiple sources, i.e. water tanks placed inside compartments of the galley or water tanks in aircraft cabin trolleys parked in the galley. The aircraft galley may further comprise a cold-water supply that is configured to be connected to at least one of the water tanks or aircraft cabin trolleys with such water tanks, thereby creating a modular, ecological, economical and lightweight cold-water supply.
(13) Aircraft with the water tank according to one of sections (1) to (10) or with the aircraft cabin trolley according to section (11) or with the aircraft galley according to section (12).

### Brief Description of the Drawings

The foregoing summary, as well as the following detailed description, will be better understood when read in conjunction with the appended drawings. For the purposes of illustrating the present disclosure, preferred embodiments are shown in the drawings. It should be understood, however, that the invention is not limited to the specific embodiments disclosed, and reference is made to the claims for that purpose. In the drawings:
- Fig. 1: shows a side cross-section view of a water tank according to a first embodiment of the invention;
- Fig. 2: shows a side cross-section view of a water tank according to a second embodiment of the invention; and
- Fig. 3: shows an aircraft galley in an aircraft.

### Detailed Description

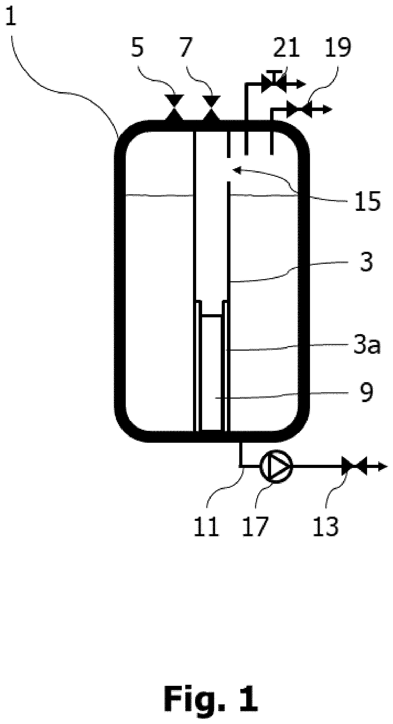

Fig. 1 shows a side cross-section view of a water tank 1 according to a first embodiment of the invention. Said tank 1 is designed as an insulated tank, for example a tank having a cylindrical shape and a volume of 10 liters. The tank 1 comprises a top wall and an opposite bottom wall, wherein both are connected by means of a side wall. Inside the tank 1 there is a vertically longitudinally extending dry ice compartment 3 having a smaller diameter and being surrounded by the water inside the tank 1. Here, the dry ice compartment 3 extends from the bottom wall of the tank 1 to the top wall of the tank 1 and in parallel to the side wall of the tank 1. The dry ice compartment 3 comprises an insulation 3a that is configured to prevent the water volume from freezing to such an extent that passage to and/or through the water outlet, which is described below, is blocked. Here, the insulation 3a is only provided along a bottom part of the dry ice compartment 3. The tank 1 is provided with a water inlet port 5, a dry ice inlet port 7 and an insulation (not shown) attached to the outer side of its wall. Additionally or alternatively, the wall of the tank 1 may be made of a vacuum insulation wall. Such a vacuum insulation wall is an evacuated gas impermeable heat insulation wall with a core material comprising or consisting of a pressed powder board of fumed silica. A vacuum insulation wall may also be used for the insulation 3a of the bottom part of the dry ice compartment 3.

The dry ice compartment 3 is arranged axially within the tank 1 and is charged with dry ice 9, wherein the dry ice 9 is in thermal contact with the water via the wall of the dry ice compartment 3. Thus, inside the tank 1 there is a temperature gradient. Due to the anomaly of water, the water at the bottom of the tank 1 will always be at 4 °C. This is where the water is taken by a water outlet 11 from the tank 1, wherein the amount of water drained from the tank 1 is controlled by a water outlet valve 13. In this way the water taken from the tank 1 keeps a substantially constant temperature of 4 °C, even if the water cools further up the water column in the tank 1. Because the tank 1 and the dry ice compartment 3 are sealed and in the upper part of the dry ice compartment 3 there is provided a pressure relief hole 15, a controlled pressurization of the tank 1 by the dry ice 9 evaporating through the hole 15 is possible. This facilitates an easy taking or pumping of water from the tank 1 to a tapping point (not shown).

The tank 1 can be provided with an additional pump 17 as a backup, so that water can be taken from the tank 1 even when the gas pressure above the water volume decreases and additional pumping pressure becomes necessary. For controlling of the pressure inside the tank 1 there is provided a pressure control and ventilation valve 19 which is installed to keep the pressure at a desired constant level, e.g. 4 bar, and to avoid pressures that are too high. For example, the pressure control and ventilation valve 19 may be configured to provide feedback to the pump 17, either directly or indirectly via a control unit (not shown), and the pump 17 may be configured to compensate insufficient pressure within the tank 1.

In addition to the control and ventilation valve 19 an additional manually operable valve 21 can be provided so that the flight attendant can open this valve 21 to equalize the pressure in the tank 1. This valve 21 can be used for stopping an uncontrolled water outflow from the tank 1 or for maintenance purposes.

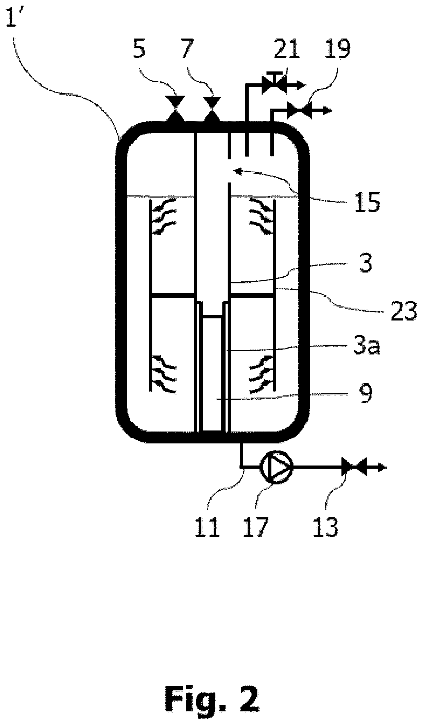

Fig. 2 shows a side cross-section view of a water tank 1' according to a second embodiment of the invention. Here, the tank 1' has the same features as in the first embodiment. However, heat pipes 23, which are an example of heat exchanging elements, are attached to the dry ice compartment 3 extending vertically towards the surface of the water volume between the dry ice compartment 3 and the side wall of the tank 1. Since the heat pipes 23 are in direct contact with and surrounded by water, a faster cooling of the water and a reduced temperature gradient can be achieved. Thus, warm water in the top of the tank 1 is cooled by the heat exchange via the heat pipes 23 in addition to the heat exchange via the dry ice compartment 3. Here, to prevent built-up of ice, which blocks passage of water to and/or through the water outlet 11, the heat pipes 23 are attached to the dry ice compartment 3 and extend above the insulation 3a towards the top wall of the tank 1'.

The at least one heat exchanging element 23, e.g. the heat pipes 23, may be configured to be operational and/or most efficient only within a predetermined temperature range of the water volume within the tank 1, 1', such as from 1 °C, 2 °C, 3 °C or 4 °C. Thereby, water of the water volume within the tank 1, 1' can be prevented from freezing to the at least one heat exchanging element 23, e.g. the heat pipes 23.

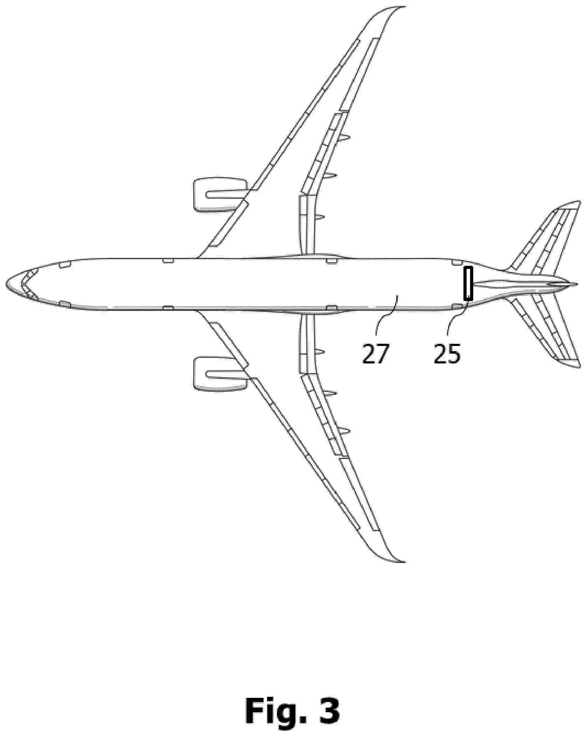

Fig. 3 shows an aircraft galley 25 in an aircraft 27, wherein the water tank 1, 1' is provided either in a compartment of the aircraft galley 25, or in an aircraft cabin trolley parked in the aircraft galley 25.

## Claims

1. Water tank (1, 1'), comprising:
a dry ice compartment (3) arranged inside the tank (1, 1') to be brought in contact with water to be cooled inside the tank (1, 1'), wherein the compartment (3) is provided with a hole (15) for discharging evaporated gas from the compartment (3) into a space that is closer to a top wall of the tank (1, 1') than a bottom wall of the tank (1, 1'), wherein a side wall of the tank (1, 1') connects the top and the bottom walls of the tank (1, 1'), and that is above the water volume within the tank (1, 1'); and
a water outlet (11) extending from the bottom wall of the tank (1, 1').

2. Water tank (1') according to claim 1, wherein said tank (1') further comprises at least one heat exchanging element (23) thermally contacting the dry ice compartment (3) and extending into the water volume to be cooled.

3. Water tank (1') according to claim 2, wherein the at least one heat exchanging element (23) comprises a major portion extending in parallel to the side wall of the tank (1').

4. Water tank (1') according to claim 3, wherein said major portion of the at least one heat exchanging element (23) is closer to the side wall of the tank (1') than to the dry ice compartment (3).

5. Water tank (1') according to one of claims 2 to 4, wherein multiple heat exchanging elements (23) are provided as heat pipes, which comprise a minor portion extending orthogonally from a bottom portion of the dry ice compartment (3).

6. Water tank (1, 1') according to one of claims 1 to 5, wherein the dry ice compartment (3) is arranged at a center of the tank (1, 1'), and wherein the water outlet (11) extends from the bottom wall of the tank (1, 1') at a location closer to the dry ice compartment (3) than to the side wall of the tank (1, 1').

7. Water tank (1, 1') according to one of claims 1 to 6, wherein said tank (1, 1') is equipped with a pump (17) configured to pump water from the tank (1, 1').

8. Water tank (1, 1') according to one of claims 1 to 7, wherein said tank (1, 1') further comprises a pressure control and ventilation valve (19) configured to control the pressure inside the tank (1, 1').

9. Water tank (1, 1') according to one of claims 1 to 8, wherein said tank (1, 1') further comprises a manual valve (21) configured to be opened to equalize the pressure within the tank (1, 1').

10. Water tank (1, 1') according to one of claims 1 to 9, wherein the dry ice compartment (3) comprises an insulation that is configured to prevent the water volume from freezing to such an extent that passage to and/or through the water outlet (11) is blocked.

11. Aircraft cabin trolley with the water tank (1, 1') according to one of claims 1 to 10.

12. Aircraft galley (25) with the water tank (1, 1') according to one of claims 1 to 10 or with the aircraft cabin trolley according to claim 11.

13. Aircraft (27) with the water tank (1, 1') according to one of claims 1 to 10 or with the aircraft cabin trolley according to claim 11 or with the aircraft galley (27) according to claim 12.
